# EUROPÄISCHE PATENTANMELDUNG

(11) **EP 2 371 590 A1**
(43) Veröffentlichungstag der Anmeldung: **05.10.2011**
(21) Anmeldenummer: 11160644.8
(22) Anmeldetag: 31.03.2011
(51) Int. Cl.: B60H 1/22, B60H 1/03

(54) **Heizungs-, Belüftungs- und/oder Klima-Anlage für ein Fahrzeug**

(30) Priorität: 01.04.2010 DE 102010003611
(71) Anmelder: Behr GmbH & Co. KG, 70469 Stuttgart (DE)
(72) Erfinder: Wolf, Walter, 71570, Oppenweiler-Zell (DE)
(74) Vertreter: Grauel, Andreas

(57) **Zusammenfassung**

Erfindungsgemäß sind für eine möglichst einfach aufgebaute Heizungs-, Belüftungs- und/oder Klima-Anlage für ein Fahrzeug mit einem von einem Gebläse (3) gelieferten ersten Luftstrom und einem von einem externen Zuheizer gelieferten zweiten Luftstrom wenigstens zwei Luftführungssysteme (1, 2) vorgesehen, in denen die beiden Luftströme gesondert in einen Passagierraum des Fahrzeugs führbar sind.

## Beschreibung

Die Erfindung betrifft eine Heizungs-, Belüftungs- und/oder Klima-Anlage für ein Fahrzeug mit einem von einem Gebläse gelieferten ersten Luftstrom und einem von einem externen Zuheizer gelieferten zweiten Luftstrom.

In derartigen, meist für Fahrzeuge vorgesehenen Klimaanlagen, können die beiden Luftströme insbesondere verschiedene Temperaturen aufweisen. Dennoch soll die Temperatur in einem Innenraum des Fahrzeugs einstellbar sein.

Diese Problematik verschärft sich bei Fahrzeugen, die für minimalen Kraftstoffverbrauch ausgelegt sind. Dabei produziert der verwendete Fahrzeugantrieb in der Regel wenig oder fast keine Abwärme, ebenso steht wenig Strom für die Fahrzeugbeheizung zur Verfügung. Daher ist ein Zuheizer erforderlich. Der externe Zuheizer ist hingegen bezüglich der von ihm gelieferten Wärmemenge nicht oder nur groben Stufen einstellbar,

Als Zuheizers sind Standheizungen oder andere Zuheizer, die Kraftstoff verbrennen, bekannt. Diese erhitzen die Luft, die unmittelbar mittels eines Gebläses in die Fahrzeugkabine gefördert und dort verteilt wird. Eine Regelung der Temperatur und der Luftmenge und der Temperatur kann so nur eingeschränkt oder gar nicht stattfinden. Ferner wird die Luft in derartigen Anordnungen immer an der gleichen Stelle angesaugt, sei es von außen oder aus der Fahrzeugkabine. Alternativ können auch elektrische Zuheizer eingesetzt werden, sofern ausreichend elektrische Energie zur Verfügung steht.

Die Zuheizer können gegebenenfalls auch Wasser erwärmen, jedoch entsteht dann nicht unbeträchtliches Mehrgewicht durch einen Heizkörper, die erforderlichen Wärmeträger sowie das verwendete Wasser.

Neben den oben erwahnten Nachteilen eines Zuheizers, der Luft erwärmt, besteht die Problematik, dass ein in den Zuheizer integriertes Gebläse in der Regel nicht genügend Luft fördern kann, um zum Beispiel Scheiben von Eis zu befreien oder überhaupt den erforderlichen Luftaustausch in der Kabine sicherzustellen. Außerdem können Luftmenge und Temperatur eines derartigen Zuheizers nicht unabhängig voneinander eingestellt und geregelt werden.

Es ist Aufgabe der Erfindung, eine möglichst einfach und wirtschaftlich aufgebaute Klimaanlage der eingangs genannten Art anzugeben.

Diese Aufgabe ist für eine Klimaanlage der eingangs genannten Art dadurch gelöst, dass wenigstens zwei Luftfu̇hrungssysteme vorgesehen sind, in denen die beiden Luftströme gesondert in einen Passagierraum des Fahrzeugs führbar sind.

Eine derartige Klimaanlage ist sehr einfach aufgebaut, da sie nur zwei gesonderte Luftführungssysteme benötigt, in denen jeweils einer der Luftströme geführt wird. Dennoch wird die Anlage den eingangs genannten Anforderungen gerecht, da eine Mischung der beiden Luftströme stattfindet. Diese findet im Fahrzeuginnenraum statt, so dass sich besondere Mischmodule oder Ähnliches in der Klimaanlage erübrigen, so dass diese im Aufbau sehr einfach gehalten werden kann. Der Zuheizer kann je nach Bedarf an- oder abgeschaltet werden.

Zur optimalen und bedarfsgerechten Mischung der beiden Luftströme ist nach Ausgestaltungen der Erfindung vorgesehen, dass das erste Luftführungssystem Defrost-Austritte für Fahrzeugscheiben, vorzugsweise für eine Frontscheibe, und Belüftungsaustritte aufweist und dass das zweite Luftführungssystem Defrost-Austritte für Fahrzeugscheiben, vorzugsweise für eine Frontscheibe, und Austritte für einen Fahrzeug-Fußraum aufweist. Auf diese Weise werden die wärmere Luft vom Zuheizer und die Frischluft vom Gebläse jeweils in die Bereiche eines Fahrzeuginnenraums geführt, in denen sie gewünscht sind.

Darüber hinaus kann, wie nach einer weiteren Ausgestaltung der Erfindung vorgesehen ist, der erste Luftführungssystem zwischen Frischluftzufuhr und Umluft umstellbar sein. Dies ist beispielsweise für eine schnellere Erwärmung des Fahrzeuginnenraums vorteilhaft.

Nach weiteren Ausgestaltungen der Erfindung ist für einen Sommer-, Winter- oder Mischbetrieb zur optimalen Temperatur und Temperaturverteilung im Fahrzeuginnenraum vorgesehen dass dass in einem Sommerbetrieb vorzugsweise das erste Luftfu̇hrungssystem aktivierbar ist, dass in einem Winterbetrieb vorzugsweise das zweite Luftführungssystem aktivierbar ist und dass in einem Mischbetrieb vorzugsweise das erste Luftführungssystem für Lüftung und/oder Defrostung und das zweite Luftführungssystem für Fußraum-Heizung einsetzbar sind. Auf diese Weise ist je nach Aktivierung der beiden Luftführungssysteme ein Temperaturbereich stärker gewichtet.

Zur erweiterten Einstellbarkeit können, wie gemäß weiteren Ausgestaltungen der Erfindung vorgesehen ist, vorteilhaft die Mengen der Lufttströme mittels im Fahrzeuginnenraum vorgesehener Ausströmer sowie die Menge des ersten Luftstromes mittels entsprechender Drehzahl Gebläses einstellbar sein.

Nachfolgend werden einige Ausführungsbeispiele der Erfindung anhand der Zeichnung näher erläutert. Es zeigen;
Figur 1 eine schematische Darstellung einer erfindungsgemäβen Heizungs-, Belüftungs- und/oder Klima-Anlage,
Figur 2 eine Skizze einer ersten Ausführungsform eines ersten und eines zweiten Luftführungssystems der Anlage gemäß Figur 1 im Ausströmerbereich.
Figur 3 eine Skizze einer zweiten Ausführungsform eines ersten und eines zweiten Luftführungssystems der Anlage gemäß Figur 1 im Ausströmerbereich,
Figur 4 eine Skizze einer ersten Ausführungsform eines ersten und eines zweiten Luftführungssystems der Anlage gemäß Figur 1 im Verteilbereich und
Figur 5 eine Skizze einer zweiten Ausführungsform eines ersten und eines zweiten Luftführungssystems der Anlage gemäß Figur 1 im Verteilbereich.

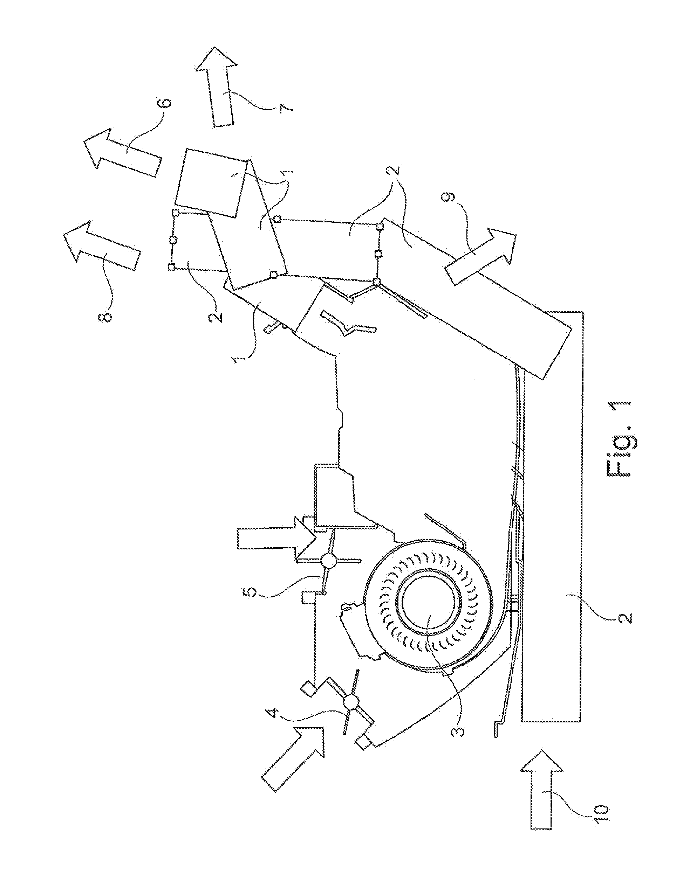

In Figur 1 ist schematisch eine erfindungsgemäße Heizungs-, Belüftungs- und/oder Klima-Anlage für ein in der Figur nicht skizziertes Fahrzeug dargestellt,

Die Anlage weist zwei unabhängige und getrennte Luftführungssysteme 1 und 2 auf.

Dem ersten Luftführungssystem 1 ist mittels eines Gebläses 3 Luft zuführbar. Die eingangsseitige Luftführung vor dem Gebläse ist mittels zweier Luftklappen 4 und 5 einstellbar. Ist, wie in der Figur dargestellt, die Luftklappe 4 geöffnet und die Luftklappe 5 geschlossen, so wird dem Gebläse 3 und damit dem ersten Luftführungssystem 1 Frischluft zugeführt. In umgekehrten Stellung der Klappen 4 und 5gelangt Umluft in das erste Luftführungssystem 1. Auch eine Mischung aus Frischluft und Umluft ist mittels geeigneter Stellungen der beiden Klappen 4 und 5 einstellbar.

Im Falle einer Einstellung der Klappen 4 für Frischluft und 5 für Umluftbeispielsweise durch getrennte Antrieb, kann ein beliebiger Anteil von Frischluft zu Umluft angesteuert werden, um energieminimal die Funktionen Defrost und/oder Defog der Scheiben zu gewährleisten.

Hinter dem Gebläse 3 ist das Luftführungssystem 1 so gestaltet, dass die in ihm geführte Luft einem Scheiben-Defrost-Bereich eines in der Figur nicht dargestellten Fahrzeuginnenraums zuführbar ist, Dies ist in der Figur 1 mittels eines Pfeils 6 angedeutet. Ferner ist das Luftführungssystem 1 so gestaltet, dass es dem Fahrzeuginnenraum Luft zu dessen allgemeiner Belüftung zuführt; dies ist in der Figur 1 mittels eines Pfeils 7 angedeutet.

Dem zweiten Luftführungssystem 2 ist mittels eines externen und in der Figur nicht dargestellten Zuhezers vorzugsweise warme Luft zuführbar (in der Figur mittels Pfeil 10 angedeutet). Das zweite Luftführungssystem 2 ist so gestaltet, dass die in ihm geführte Luft einem Scheiben-Defrost-Bereich eines in der Figur nicht dargestellten Fahrzeuginnenraums zuführbar ist. Dies ist in der Figur 1 mittels eines Pfeils 8 angedeutet. Ferner ist das Luftführungssystem 2 so gestaltet, dass es einem Fußraum des Fahrzeuginnenraums Luft zuführt; dies ist in der Figur 1 mittels eines Pfeils 9 angedeutet. Dies ist vorteilhaft, da das zweite Luftführungssystem 2 vorzugsweise Warmluft führt.

Die schematische Darstellung gemäß Figur 1 verdeutlicht, dass die beiden Luftführungssysteme 1 und 2 getrennt geführt sind und dass eine Mischung der in ihnen geführten Luftströme erst im Fahrzeuginnenraum stattfindet. Eine Einstellung der Mengen der beiden Luftströme und somit der Temperatur im Fahreuginnenraum kann mittels Aktivierung bzw. Deaktivierung oder Drehzahleinstellung des Gebläses 3 und des externen Zuheizers erfolgen. Darüber hinaus können Ausströmer im Bereich der Pfeile 6 bis 9 einstellbar sein.

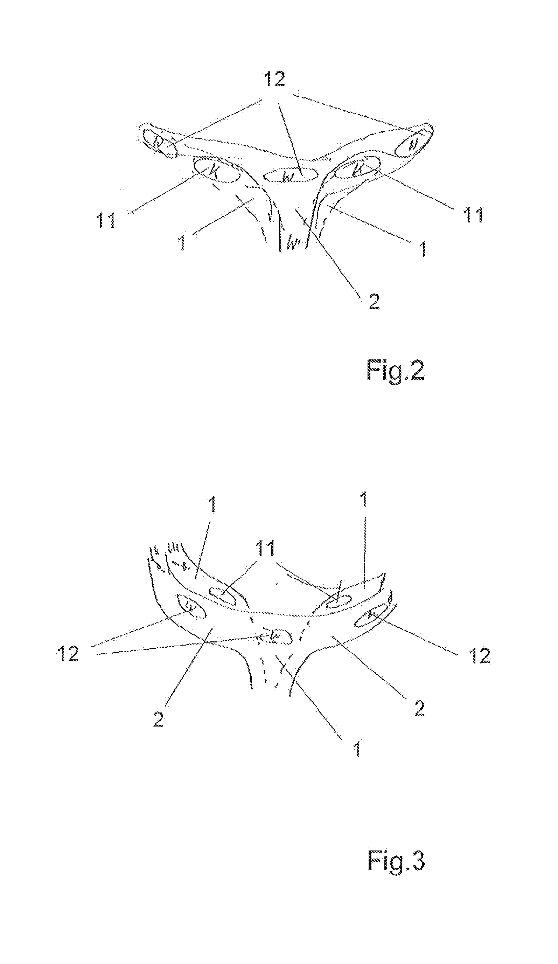

Im Folgenden sollen anhand der Figuren 2 bis 5 einige vorteilhafte Ausgestaltungen der beiden Luftführungssysteme 1 und 2, insbesondere im Bereich von deren Verteilung und im Bereich von Ausströmern im Scheiben-Defrost-Bereich eines Fahrzeugs, näher erläutert werden.

Wie oben bereits erläutert wurde, wird zur allgemein Fahrzeugbelüftung vorzugsweise der im ersten Luftführungssystem 1 geführte Luftstrom eingesetzt, da er im Wesentlichen ungeheizte Luft führt. Hingegen liefert der Zuheizer vorzugsweise warme Luft, so dass dessen Luft mittels des zweiten Luftführungssystem 2, vorzugsweise zur Defrostung im Winter, einem Fußraum des Fahrzeuginnenraums zugeführt wird. Hingegen soll einem Scheiben-Defrost-Bereich des Fahrzeuginnenraums sowohl kalte wie auch warme Luft zuführbar sein.

Die Figuren 2 und 3 zeigen in schematischer Darstellung zwei vorteilhafte Ausführungsformen der beiden Luftführungssysteme 1 und 2 in diesem Scheiben-Defrost-Bereich.

Figur 2 zeigt die beiden Luftführungssysteme 1 und 2 im Bereich von Scheiben-Dafrost-Öffnungen. Die beiden Luftführungssysteme 1 und 2 sind ineinander verschlungen geführt. Das erste Luftführungssystem 1 weist Ausströmer-Öffnungen 11 und das zweite Luftführungssystem 2 weist Ausströmer-Öffnungen 12 auf. Durch diese gedrungen Führung der beiden Luftführungssysteme ist es möglich, beide Luftströme einem Scheiben-Defrost-Bereich eines Fahrzeugs zuzuführen, ohne diese vorher zu mischen.

Figur 3 zeigt eine weitere Ausführungsform der beiden Luftführungssysteme 1 und 2 im Bereich von Scheiben-Defrost-Öffnungen. Die beiden Luftführungssystem 1 und 2 sind hier hintereinander bzw. nebeneinander geführt, und das erste Luftführungssystem weist Ausströmer-Öffnungen 11 und das zweite Luftführungssystem weist Ausströmer-Öffnungen 12 auf.

Gegebenenfalls sind die beiden Luftführungssysteme 1 und 2 schon vor dem Scheiben-Defrost-Bereich (oder anderen Ausströmern) so zu gestalten, dass sie sich in mehrere Verteil-Zweige aufteilen.

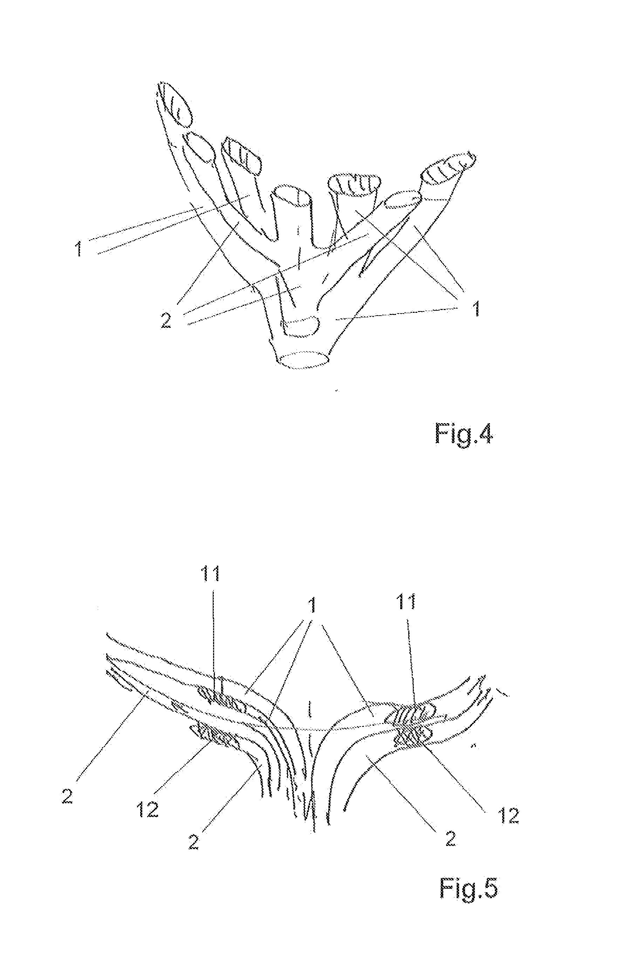

Die Figuren 4 und 5 zeigen in schematischer Darstellung zwei vorteilhafte Ausführungsformen der beiden Luftführungssysteme 1 und 2 in Verteil-Bereichen. Dabei ist zu betonen, dass die beiden Luftströme auch in diesen Bereichen immer getrennt geführt werden.

Figur 4 zeigt eine erste Ausführungsform eines Verteif-Bereiches der beiden Luftführungssysteme 1 und 2. Die Darstellung zeigt, dass die Systeme sich in Art einer baumförmigen Struktur in mehrere Einzelstränge verästeln.

Figur 5 zeigt eine zweite Ausführungsform eines Verteil-Bereiches der beiden Luftführungssysteme 1 und 2. Die Darstellung zeigt, dass die Systeme jeweils in mehreren Strängen nebeneinander geführt sind. Dabei können diese Stränge unterschiedlich lang sein und weisen an ihren Enden jeweils Ausströmer 11 bzw. 12 auf.

Die Ausströmer 11 und 12 gemäß den Figuren 2 bis 5 können Darüber hinaus so gestaltet sein, dass die Größe der Querschnitte ihrer AusblasÖffnungen einstellbar ist, so dass auch auf diese Weise die Intensität der beiden Luftströme im Fahrzeuginnenraum einstellbar ist. Dies kann vorteilhaft erreicht werden durch Absperr- und/oder Drosselklappen an den Ausströmern, Weiterhin ist es bei dieser Lösung vorteilhaft, wenn die Defrostöffnungen in ihrer Aussirömrichtung einstellbar sind oder alternativ dazu fest eingestellt sind um direkte Kaltluft zur Scheibe, wie insbesondere Frontscheibe, des Fahrzeugs zur Vermeiden, um die Gefahr von Beschlagbildung zu reduzieren. Der wärmere Luftstrom verläuft vorzugseise scheibennah, der kältere Luftstrom verläufteher scheibenfern, um einen guten Kompromiss zwischender Vermeidung eines Scheibenbeschalgs (Defog) und der Kopfraumüberhitzung zu ermöglichen.

## Patentansprüche

1. Heizungs-, Belüftungs- und/oder Klima-Anlage für ein Fahrzeug mit einem von einem Gebläse (3) gelieferten ersten Luftstrom und einem von einem externen Zuheizer gelieferten zweiten Luftstrom, **dadurch gekennzeichnet, dass** wenigstens zwei Luftführungssysteme (1, 2) vorgesehen sind, in denen die beiden Luftströme gesondert in einen Passagierraum des Fahrzeugs führbar sind.

2. Heizungs-, Belüftung- und/oder Klima-Anlage für ein Fahrzeug nach Anspruch 1, **dadurch gekennzeichnet, dass** der erste Luftstrom ausschließlich einem ersten Luftführungssystem (1) und der zweite Luftstrom ausschließlich einem zweiten Luftführungssystem (2) führbar sind.

3. Heizungs-, Belüftungs- und/oder Klima-Anlage für ein Fahrzeug nach Anspruch 2, **dadurch gekennzeichnet, dass** das erste Luftführungssystem (1) Defrost-Austritte für Fahrzeugscheiben. vorzugsweise für eine Frontscheibeund/oder eine Seitenscheiben und Belüftungsaustritte aufweist.

4. Heizungs-, Belüftungs- und/oder Klima-Anlage für ein Fahrzeug nach Anspruch 2 oder 3, **dadurch gekennzeichnet, dass** das zweite Luftführungssystem (2) Defrost-Austritte für Fahrzeugscheiben, vorzugsweise für eine Frontscheibe und/oder eine Seitenscheibe, und Austritte für einen Fahrzeug-Fußraum aufweist.

5. Heizung-, Belüftungs- und/oder Klima-Anlage für ein Fahrzeug nach einem der Ansprüche 1 bis 4, **dadurch gekennzeichnet, dass** das erste Luftführungssystem (1) zwischen Frischluftzufuhr und Umluft umstellbar ist.

6. Heizungs-, Belüftungs- und/oder Klima-Anlage für ein Fahrzeug nach einem der Ansprüche 1 bis 5, **dadurch gekennzeichnet, dass** das zweite Luftführungssystem (2) vorzugsweise von außen zuführbare Frischluft führt.

7. Heizungs-, Belüftungs- und/oder Klima-Anlage für ein Fahrzeug nach einem der Ansprüche 1 bis 6, **dadurch gekennzeichnet, dass** in einem Sommerbetrieb vorzugsweise das erste Luftführungssystem (1) aktivierbar ist.

8. Heizungs-, Belüftungs- und/oder Klima-Anlage für ein Fahrzeug nach einem der Ansprüche 1 bis 7, **dadurch gekennzeichnet, dass** in einem Winterbetrieb vorzugsweise das zweite Luftführungssystem (2) aktivierbar ist,

9. Heizungs-, Belüftungs- und/oder Klima-Anlage für ein Fahrzeug nach einem der Ansprüche 1 bis 8, **dadurch gekennzeichnet, dass** in einem Mischbetrieb vorzugsweise das erste Luftführungssystem (1) für Lüftung und/oder Defrostung und das zweite Luftrührungssystem (2) für Fußraum-Heizung einsetzbar sind.

10. Heizungs-, Belüftungs- und/oder Klima-Anlage für ein Fahrzeug nach einem der Ansprüche 1 bis 9, **dadurch gekennzeichnet, dass** die Mengen der Lufttströme mittels im Fahrzeuginnenraum vorgesehener Ausströmer einstellbar sind.

11. Heizungs-, Belüftungs- und/oder Klima-Anlage für ein Fahrzeug nach einem der Ansprüche 1 bis 10, **dadurch gekennzeichnet, dass** die Menge des ersten Luftstroms mittels entsprechender Drehzahl Gebläses einstellbar ist.

12. Heizungs-, Belüftungs-und/oder Klima-Anlage für ein Fahrzeug nach einem der Ansprüche 1 bis 11, **dadurch gekennzeichnet** das die wärmere Luft zu Defrost - und Defogzwecken vorzugsweise scheibennah austritt oder durch einstellbare Ausströmer auf die Scheiben gelenkt wird.

13. Fahrzeug mit einer Heizungs-, Belüftungs- und/oder Klima-Anlage nach einem der Ansprüche 1 bis 12.
